# EUROPEAN PATENT APPLICATION

(11) **EP 0 670 640 A2**
(43) Date of publication of application: **06.09.1995**
(21) Application number: 95850041.5
(22) Date of filing: 21.02.1995
(51) Int. Cl.: H04B 7/26

(54) **Arrangement for a TDMA/TDD radiocommunication system with a structure for combining time slots**

(30) Priority: 03.03.1994 SE 9400722
(71) Applicant: TELIA AB, S-126 86 Farsta (SE)
(72) Inventor: Olanders, Peter, S-234 33 Lomma (SE)
(74) Representative: Karlsson, Berne

(57) **Abstract**

In a radiocommunications system of the DECT type, one or more of the functions of the system are improved, for example range, time delay, time dispersion, etc. The system operates with a TDMA/TDD structure and with time slots for transmission of, inter alia, data. Two adjacent time slots are combined to form a double time slot. In one embodiment, a time slot is embedded in a double time slot.

## Description

### TECHNICAL FIELD

The present invention relates to an arrangement for improving, in a radiocommunications system of the DECT (Digital European Cordless Telecommunications) type, one or more of the functions of the system, examples of these functions which may be mentioned here being range, time delay, time dispersion, etc. The system operates in a known manner with a TDMA/TDD structure which comprises time slots for transmission of, inter alia, data (including synchronization and signalling information).

### PRIOR ART

DECT is a TDMA/TDD-based system which is designed for a plurality of applications and which is intended to provide, in these applications, a high quality (speech quality, for example) and capacity with, at the same time, considerable flexibility at low cost. The considerable flexibility results in many excellent properties such as, for example, smooth and dynamic channel allocation, and dynamically variable user capacity. The high capacity (10,000 erlang/km²/dwelling) of the DECT system is, inter alia, a consequence of the small cells.

The short range of the DECT system may be said to be due mainly to two separate factors: low signal level (small cells <≃> low signal level) and time aspects (principally time delay, but also time dispersion). The signal level can be raised with, for example, directional antennas (which to a certain extent also eliminate the problems of time dispersion), but the maximum acceptable time delay is a result of chosen parameter values in the TDMA/TDD structure. The DECT standard allows for antennas with high directivity: 12 dBi is generally admissible, and up to 22 dBi following national consent (22 dBi gain starting from the DECT output level gives a field strength, in the main direction of the lobe, corresponding to 50 W 0 dBi). (NH: The signal level can of course also be raised with, for example, more powerful output amplifiers, something which is not permitted in the DECT standard, and in such a case the problems of time dispersion still remain).

The long-established use of time division (TDMA/TDD) in DECT has sometimes been criticized for resulting in the system being insufficiently robust; some other systems which have been specified at the same time as DECT (CT2, PHP, Bellcore) have had greater emphasis placed precisely on robustness as regards time delays and time dispersion (at the cost of capacity, quality and flexibility).

Practical trials and test systems have shown that DECT is sufficiently robust for the areas of use for which it is specified, and neither time delay nor time dispersion is considered to represent any serious problem.

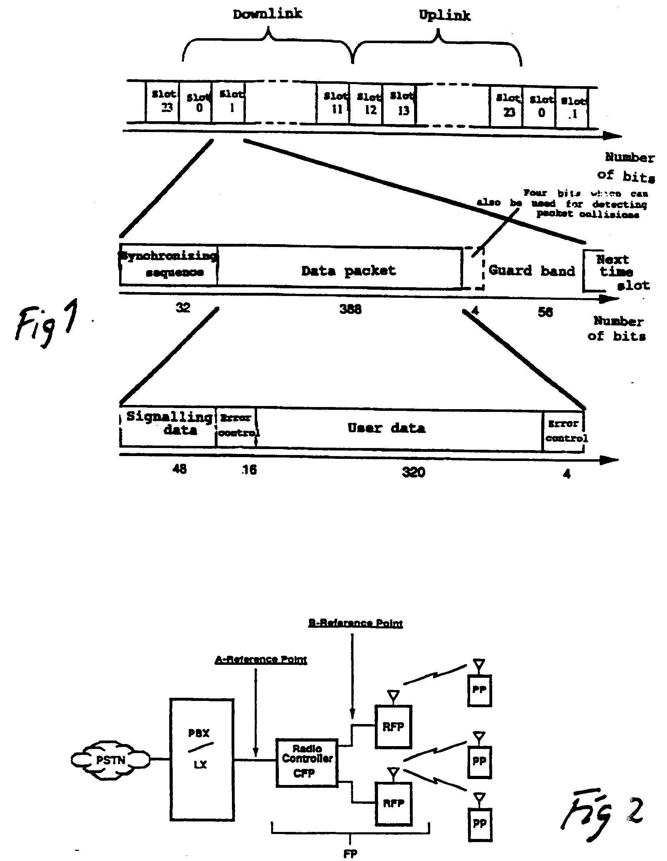

However, there are applications where it would be desirable to have greater tolerance in respect of time delay (and possibly time dispersion), one example being when (in DECT measurements) there is a large distance between Fixed Part (FP; DECT's equivalence to base station) and Portable Part (PP), as the time delay limits this distance to several kilometres in accordance with the following calculation (see also Figure 1); a part of the synchronization sequence in one slot, and a small part of the guard band, can be used to handle the time delay, approximately a total of 20 bits, which gives an overall acceptable time delay of (20/480)*(10/24) ms = 0.02 ms => R=c*0.02 × 10⁻³ /2=3 km). The number of bits available for synchronization also depends on the quality of the equipment (for example, the precision of the internal clock, diversity (algorithms) etc). From this it will be understood that, independently of signal level/field strength, the range between a DECT's PP and FP will have an upper limit of a few km as a function of the time delay.

Reference is made to Figure 1, which describes the radio channel arrangement (on a carrier frequency). Seen from the RFP (Radio Fixed Part, a part of a FP in DECT) point of view, the downlink of course will be well synchronized. As far as the uplink is concerned, it can happen that time slot 12 may be delayed by the time t₁₂, time slot 13 by the time t₁₃ etc. This spread in "arrival times" is one of the reasons preventing a delay of the entire frame.

For obvious geometrical reasons, all small-cell systems (picocell) have problems in providing area coverage. In its simplest form, area coverage can be obtained by simple routing of cables (à la local area network) to the points where the FP are set up. However, where large areas are to be covered, this requires very great investments.

A way of reducing the costs of the distribution network in a DECT system would be to use DECT connections for the distribution network itself. However, the short radio range limits these possibilities. A number of different proposals have been made for at least partially remedying the disadvantage of the short range in some applications by means of a repeater function.

EP 399 610 relates to a digital cordless telephone system which uses TDD (Time Division Duplex). The document describes a method for being able to reach farther, using a so-called beacon signal, than what the system permits for a speech channel, without increasing the output power. This is achieved by using a bit rate which is lower than in the speech channel.

EP 186 229 describes a digital radio system which uses TDMA. According to the document, the guard interval between the time slots varies as a function of the distance, and in this way data can be transmitted efficiently and without risk of collision/overlapping over long distances.

US 5 200 955 shows a repeater for a mobile radio system which uses TDMA. The repeater is used to increase the coverage area/the communication distance by means of amplifying channels in an area with poor field strength.

US 5 265 150 relates to a cordless PBX system, for example for cordless telephony. The system consists of a number of fixed terminals and cordless telephones. The terminals can be placed anywhere, and the system automatically configures itself for optimum functioning. Certain terminals can function as repeaters in order to extend the coverage area.

US 5 152 002 describes a system and a method for extending the coverage area for a base station. A number of repeaters are placed in the area in which coverage is desired. The repeaters can be used in order to amplify the same frequency or to convert to another frequency.

US 4 549 293 shows a cordless communications system which uses TDMA. The system consists of a number of radio terminals (transceivers) which can be used either as master or slave. When a terminal is used as slave, directional antennas are used for communication to the master.

### DESCRIPTION OF THE INVENTION

### TECHNICAL PROBLEM

This document focuses on how the TDMA/TDD structure built into DECT can be used to achieve greater radio range and "robustness". The solution should be able to complement the abovementioned repeater, for example.

The technical problem thus lies in the limitations which the TDMA/TDD structure of DECT, with chosen parameter values, places on the radio range and more generally "robustness".

### SOLUTION

The main object of the present invention is to propose an arrangement which solves the problems cited above, and the features which can principally be regarded as being characteristic of the invention are evident from the patent claims attached.

### DESCRIPTION OF THE FIGURES

A presently proposed embodiment of an arrangement which has the characteristics significant to the invention will be described hereinbelow with reference to the attached drawings, in which
Figure 1 shows a diagram of the TDMA/TDD structure in DECT,
Figure 2 shows in part the DECT system, in which the DECT "Fixed Point" consists of one or more repeaters RFP and a central fixed part CFP which is termed radio controller, and in which a unit PPX used can constitute a local exchange LX representing part of the public local network,
Figure 3 shows a diagram of the original time slot structure for DECT at a), and how a slot (0', 1' etc) can be embedded in a combined double time slot at b), and
Figure 4 shows an example of the use of directional antennas and repeater in combination, in which the repeater is the unit seen on the far left inside the house (the proposal shows how the range can be increased).

### DETAILED DESCRIPTION OF THE INVENTION

The DECT standard specifies the so-called double slot (double time slot). This involves two adjacent slots being joined together so that they are used as a "long" time slot, with more than twice the amount of data available, totalling about 80 kbit/s. This is possible because it is not necessary to repeat synchronization and signalling data. The double slot is created from the start in order to increase the capacity in DECT when DECT is used as access to, for example, ISDN, but it has been found that, from these points of view, there has been considerably less need for the double slot than was anticipated.

The double slot in DECT is hedged by a number of limitations, for example it is expressly specified that the double slot may not be used for PCM.

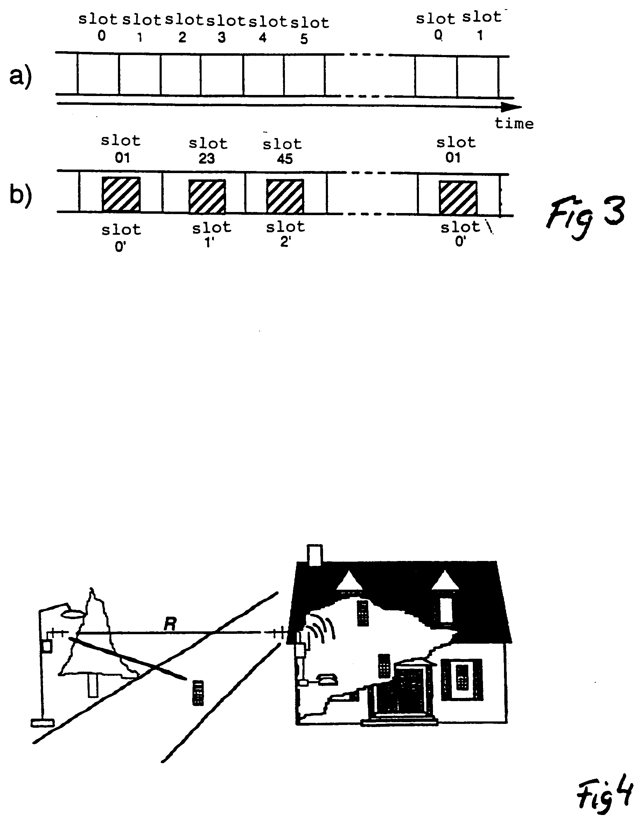

It should be possible for the double slot to be used in order to lessen the problems of time delay and time dispersion and in order to increase the "robustness" in very general terms. Probably the most cost-effective way is to "embed" a normal (single) time slot in a double one (see Figure 3). This should permit the use of the DECT standardized speech coders and other subsystems, and in particular the "original" time slot can be scaled up and used in repeaters, RFPs, without further processing.

In this way the time delay can be increased from approximately 0.02 ms (see above) to a maximum of 0.4 ms (a further 388 bits can be used for synchronization and time compensation, totalling about 400). This is for a double slot (≃2*480 bits), of which there are only 6+6 in a frame; the maximum time delay can thus be estimated at (400/960)*(10/12) = 0.4 ms).

This time delay corresponds to 60 km, which is more than is to be realistically expected for other reasons (field strength, for example). The number of "extra" sync bits for synchronization can thus be set at about 150 (=> max time delay 0.17 ms corresponding to about 25 km). The remaining "extra" 238 bits can then be used for other signalling, for use in, for example, Telepoint or "limited-area local access" (an intermediate form between RLL and Telepoint). The extra bits can also be used for increased error correction.

The contexts for which the invention is primarily intended are RLL (radio in the local loop) and Telepoint (which, within Telia, has the working name Telia Zone). In none of these applications does the full capacity in DECT need to be used, with half the nominal capacity probably being more than sufficient! This means that the very local drop in capacity, which the double slot entails, does not cause any great losses.

The invention can be used to great advantage when the range is to be extended. In these cases directional antennas are used, and the equipment coupled to these directional antennas is thus "fixed". Directional antennas also mean that the problems associated with time dispersion are to a large extent eliminated.

The double slot is best used between base station (actually DECT Fixed Part) and the equipment installed in a fixed position at the home of, or in the direct vicinity of, the user (repeater or installed fixed DECT unit). All time compensation, rearranging of time slots etc. is carried out in the base station; the repeater need only handle the double slot.

With a repeater, the user still obtains full local mobility (around the dwelling, for example). By using directional antennas, the link budget between base station and repeater can be improved by up to about 40 dB, which fact can be utilized, when employing the invention in this document, to increase the distance between base station and repeater from the forecast figure of about 2 km to 10 - 20 km. The base station can thus be installed in an already existing tall structure (radio tower, radio mast, water tower etc.), while the repeater can be mounted high up on a house or on a lamp post.

An important general problem with Telepoint, from the operator's point of view, is that it is difficult (i.e. expensive) to offer coverage over fairly large areas, particularly in an urban environment. The repeater mentioned earlier solves part of this problem. In a built-up urban environment this may be sufficient, possibly complemented by directional antennas (the built-up environment can, however, increase the requirements in respect of robustness, error correction etc., which can be compensated for by the use of the double slot proposed here). On the other hand, in a less built-up area, with low but "important" traffic, it may be advantageous to have a considerable distance between DECT FP and a Repeater. In Telepoint, data information for authentication, debiting etc. can also be included in the double slot which is proposed here.

The invention is not limited to the embodiment shown above by way of example, but can instead undergo modifications within the scope of the patent claims attached and the inventive concept.

## Claims

1. Arrangement for improving, in a radio-communications system of the DECT type or an equivalent system, one or more of the functions of the system, such as range, time delay, time dispersion, etc., the system operating with a TDMA/TDD structure which comprises time slots for transmission of, inter alia, data, characterized in that two adjacent time slots in the structure are combined to form a double time slot.

2. Arrangement according to Patent Claim 1, characterized in that a number of time slots in the structure are combined to form double time slots.

3. Arrangement according to Patent Claim 1 or 2, characterized in that each double time slot comprises more than twice the amount of data which can be transmitted by the combined time slots individually, since synchronization and signalling data does not now need to be repeated to the same extent for the two combined time slots.

4. Arrangement according to Patent Claim 1, 2 or 3, characterized in that the combination permits the use of standardized speech coders for DECT and other subsystems.

5. Arrangement according to any one of the preceding patent claims, characterized in that one of the combined time slots can be considered to be embedded in the other combined time slot and can thus be scaled up and used in a repeater (RPT).

6. Arrangement according to any one of the preceding patent claims, characterized in that the improved function entails extended range and/or greater tolerance in the transmission function.

7. Arrangement according to any one of the preceding patent claims, characterized in that the time delay through combining the time slots is extended to up to 0.4 ms, which is to be compared with the case of time slots which have not been combined, where the time delay is about 0.02 ms, the first-mentioned time delay corresponding to a range of up to about 60 km.

8. Arrangement according to any one of the preceding patent claims, characterized in that for a double time slot, compared with the case of a single time slot, the number of extra synchronization bits is chosen between 100 - 200, preferably about 150, which gives a time delay of at least 0.17 ms, which corresponds to about 25 km.

9. Arrangement according to Patent Claim 8, characterized in that extra bits , for example 238 bits, remaining due to the combination to form double time slots, take part in other signalling, for example for use in the Telepoint system or limited-area local access and/or for establishing extended error correction.

10. Arrangement according to any one of the preceding patent claims, characterized in that it can be used in contexts where the drop in capacity in the system due to the double time slot/double time slots is of minor significance, for example in systems for radio in the local loop (RLL), Telepoint systems, etc.

11. Arrangement according to any one of the preceding patent claims, characterized in that it can be used in cases where extended range is of interest, for example in joint use with directional antennas in relation to which the arrangement is to be considered as fixed.

12. Arrangement according to any one of the preceding patent claims, characterized in that the double time slot is used between base station/fixed station and the equipment which has been installed in a fixed position at the home of, or in the direct vicinity of, a user (repeater or installed fixed DECT unit), all time compensation, rearrangement of time slots, etc. being carried out in the base station, and the repeater or repeaters only needing to handle the double time slot.

13. Arrangement according to any one of the preceding patent claims, characterized in that by means of each repeater the users of the arrangement/system obtain full local mobility, for example around the dwelling, and by using a directional antenna or directional antennas the link budget between the base station, or equivalent, and each repeater shows an improvement of up to about 40 dB, which fact can itself be used to increase the distance between the base station and each repeater from about 2 km to 10 - 20 km.

14. Arrangement according to any one of the preceding patent claims, characterized in that each base station is installed in or placed upon a tall structure (radio tower, radio mast, water tower) and each repeater is placed high up on a house, lamp post, etc.

15. Arrangement according to any one of the preceding patent claims, characterized in that the double time slot offers increased robustness, an error correction possibility, etc., in a built-up environment, possibly together with repeater and/or directional antennas.

16. Arrangement according to any one of the preceding patent claims, characterized in that in a less built-up area/environment, with low but important traffic, the distance between each base station and repeater is chosen to be relatively great.

17. Arrangement according to any one of the preceding patent claims, characterized in that the double time slot contains, in addition to the data mentioned, data information for authentication, debiting, etc.

18. Arrangement according to any one of the preceding patent claims, characterized in that the double time slot is known per se in the system, but is used for other purposes.
